# EUROPÄISCHE PATENTSCHRIFT

(11) **EP 1 634 558 B1**
(45) Veröffentlichungstag und Bekanntmachung des Hinweises auf die Patenterteilung: **29.10.2008**
(21) Anmeldenummer: 04021259.9
(22) Anmeldetag: 08.09.2004
(51) Int. Cl.: A61G 7/012, G01G 19/44

(54) **Pflegebett**
Care bed
Lit de soins

(43) Veröffentlichungstag der Anmeldung: 15.03.2006
(73) Patentinhaber: Bangemann Eckhard, 38312 Börssum (DE)
(72) Erfinder: Bangemann Eckhard, 38312 Börssum (DE)
(74) Vertreter: Lins, Edgar

(56) Entgegenhaltungen:
- WO-A-03/079953
- DE-U1- 29 707 518
- US-B1- 6 345 543

## Beschreibung

Die vorliegende Erfindung betrifft ein Pflegebett mit Füßen oder Rädern, einem mit Abstand über dem Chassisrahmen angeordneten Auflageträger und einer zwischen Chassisrahmen und Auflageträger angeordneten Höhenverstelleinrichtung, die an einer zentralen Position an dem Auflageträger angesetzt ist

Moderne Pflegebetten, wie sie beispielsweise in Krankenhäusern verwendet werden, weisen eine Höhenverstelleinrichtung auf, um eine durch eine Auflage auf dem Auflageträger bestimmte Liegefläche in der Höhe variieren zu können. Die Liegefläche wird abgesenkt, um beispielsweise Patienten das Ein- bzw. Aussteigen zu erleichtern. Für Pflegearbeiten wird die Liegefläche mit dem Patienten angehoben, damit das Pflegepersonal diese Tätigkeiten auf einer ergonomisch sinnvollen Höhe durchführen kann.

Derartige Pflegebetten sind in der DE 102 15 395 C1 sowie in der DE 299 18 805 U1 offenbart. Bei den dort beschriebenen Pflegebetten mit einer Schwerlasthöhenverstellung ist der Chassisrahmen mit Rollen versehen, also als Fahrgestell ausgebildet. Zwischen dem Chassisrahmen und dem Auflageträger befinden sich Teleskopführungen, die für einen kippfreien Hub des Auflageträgers relativ zum Chassisrahmen sorgen. Der Hub wird mittels eines in einer zentralen Säule vorgesehenen Getriebes bewerkstelligt, das durch einen oder durch mehrere Elektromotoren angetrieben wird. Die Motoren sind in einem geschlossenen Gehäuse untergebracht und bringen ausreichende Kräfte auf, damit das erforderliche Hubgewicht und die notwendige Hubstrecke gewährleistet wird.

Bei einigen Patienten ist es sinnvoll, dass deren Gewicht regelmäßig festgestellt wird, beispielsweise für eine Überwachung einer Diät oder aus anderen, medizinisch indizierten Gründen. Das Patientengewicht wird deshalb üblicherweise außerhalb des Pflegebettes mittels einer separaten Waage erfasst. Einigen Patienten, insbesondere bettlägerigen Patienten, ist allerdings ein Verlassen des Pflegebettes für eine Gewichtsmessung nicht zumutbar oder gänzlich unmöglich. Eine regelmäßige Gewichtsüberwachung ist bei diesen Patienten nur mit einem enorm hohen Zeit- und/oder Personalaufwand durchführbar. Um eine Gewichtsmessung mit einem möglichst geringen Aufwand zu bewerkstelligen, ist bei einem bekannten Pflegebett ein zusätzlicher Rahmen vorgesehen. Zwischen den dann vorhandenen zwei Rahmen ist eine Messanordnung mit mehreren Gewichtssensoren angeordnet, die üblicherweise in den vier Eckbereichen der Rahmen vorgesehen sind.

DE 297 07 518 U1 beschreibt einen Behandlungstisch mit einer integrierten Wägeeinrichtung. Hierzu ist die Tischplatte mit vier Tischbeinen über Gewichtssensoren verbunden. Soweit der Behandlungstisch höhenverstellbar ausgebildet ist, sind zwei der Sensoren über ein Y-Gesteil mit einer hydraulischen Hubeinrichtung verbunden. Auch hierbei wird das Gewicht mittels vier zu einem Rechteck flächig verteilten Sensoren ermittelt. Eine derartige Gewichtsmessung mit vier Sensoren ist aufwändig und erfordert eine komplizierte Auswertung.

Der vorliegenden Erfindung liegt daher die Aufgabe zugrunde, in einfacher Weise eine Gewichtsüberwachung von Patienten, insbesondere von bettlägerigen Patienten, zu ermöglichen.

Zur Lösung dieser Aufgabe ist erfindungsgemäß ein Pflegebett der eingangs erwähnten Art dadurch gekennzeichnet, dass eine an der Höhenverstelleinrichtung angeordnete, an einer zentralen Position des Auflageträgers angreifende Gewichtsmesseinrichtung mit wenigstens einem Gewichtssensor.

Erfindungsgemäß ist somit eine Gewichtmesseinrichtung zwischen der Höhenverstelleinrichtung und dem Auflageträger vorgesehen, wobei die Höhenverstelleinrichtung zentral unter dem Auflageträger angeordnet ist. Die Hubbewegung setzt somit nur an einer zentralen Position an dem Auflageträger an. Durch die Anordnung der Gewichtsmesseinrichtung an dieser zentralen Position ist eine Gewichtsmessung mit einem zentralen Messpunkt möglich. Hierdurch entfällt die für eine bisherige Messeinrichtungen mit vier Messpunkten aufwändige Auswertung der mehreren Gewichtsmesswerte. Die zentrale Gewichtsmessung wird dadurch unterstützt, dass mit Gleitlagern ein Verkippen des Auflagerträgers relativ zu der Höhenverstelleinrichtung verhindert wird.

Somit ermöglicht die Erfindung eine Gewichtsüberwachung von Patienten, insbesondere bettlägerigen Patienten, durch eine in den Aufbau des Pflegebettes integrierte Gewichtsmesseinrichtung. Das Gewicht des auf der Liegefläche befindlichen Patienten kann erfasst werden, ohne dass der Patient das Pflegebett verlassen muss. Die Gewichtsmessung erfolgt in einfacher Weise ohne besondere Maßnahmen und ohne einen besonderen Zusatzrahmen. Der Aufbau des Pflegebettes ist somit konstruktiv einfach und ermöglicht eine regelmäßige Gewichtsmessung mit einem geringen Zeit- und Personalaufwand. Durch die Anordnung der Gewichtsmesseinrichtung im Zentrum des Pflegebettes ist eine hohe Messgenauigkeit gewährleistet.

Bei einem vorteilhaften Ausführungsbeispiel des erfindungsgemäßen Pflegebettes weist die Gewichtsmesseinrichtung einen Grundkörper auf, der mit seiner Unterseite an der Oberseite der Höhenverstelleinrichtung fest gelagert und mit seiner Oberseite an der Unterseite des Auflageträgers beweglich gelagert ist. Die einseitig feste und gegenüberliegendseitig bewegliche Lagerung ermöglicht eine zuverlässige Gewichtsmessung, da an der beweglich gelagerten Seite die auftretenden Gewichts kräfte in die Gewichtssensoren geleitet werden. Der Auflageträger übernimmt hierbei die Funktion der Waagschale bzw. Wägefläche.

Bei einer Ausführungsform des erfindungsgemäßen Pflegebettes ist vorgesehen, dass in dem Grundkörper zumindest eine vertikale Bohrung zur Aufnahme eines an dem Auflageträger befestigten und von diesem vorstehenden Zylinders vorgesehen ist, so dass der Grundkörper an dem Zylinder auf- und abgleitend beweglich ist. Die auf- und abgleitende Bewegung ist abhängig von der auf dem Auflageträger aufliegenden Masse bzw. dem dort vorhandenen Gewicht. Die an der Zylinderwand entlang gleitende Bohrungsinnenwand sorgt bei der gewichtsabhängigen Bewegung für eine sichere Führung des Grundkörpers.

Zur Aufnahme des Gewichtssensors weist bei einem erfindungsgemäßen Pflegebett der Grundkörper der Gewichtsmesseinrichtung eine zu der beweglich gelagerten Seite offene Ausnehmung auf. In diese Ausnehmung, beispielsweise eine Sackbohrung, wird zumindest ein Gewichtssensor eingebracht und stabil gelagert.

In vorteilhafter Weise ist das erfindungsgemäße Pflegebett mit einer mit der Gewichtsmesseinrichtung verbundenen bevorzugt elektronischen Auswerte- und Steuereinrichtung versehen. Über diese Auswerte- und Steuereinrichtung kann beispielsweise eine Null-Stellung erfolgen. D.h., die Gewichtsmesseinrichtung wird auf Null geeicht, nachdem das Pflegebett vollständig für eine Patientenaufnahme vorbereitet wurde, also nach Auflage von Matratze, Bettzeug und notwendigen medizinischen Anlagen. Wird anschließend ein Patient auf die Liegefläche des Pflegebettes gebettet, so ändert sich das auf die Gewichtsmesseinrichtung wirkende Gewicht. Folglich wird lediglich das Patientengewicht von der Gewichtsmesseinrichtung erfasst. Ferner ist beispielsweise über die Auswerte- und Steuereinrichtung einstellbar, in welchen Abständen eine Gewichtsmessung durchgeführt wird. Hierbei ist beispielsweise eine permanente Messung oder eine Messung nur nach Aufforderung möglich. Auch eine periodische, automatisch wiederholte Messung des Gewichts ist denkbar.

Bevorzugt ist bei einem erfindungsgemäßen Pflegebett eine mit der Auswerte- und Steuereinrichtung verbundene Anzeige zur Darstellung des gemessenen Gewichts vorgesehen. Diese Anzeige ist beispielsweise an einer gut einsehbaren Stelle des Pflegebettes angeordnet und zeigt das in kg-Angaben umgerechnete Ergebnis der Gewichtsmessung an.

Wenn die Höhenverstelleinrichtung des erfindungsgemäßen Pflegebettes durch eine elektrische Motoranordnung angetrieben ist, ist eine für das Pflegepersonal einfache und Kraft sparende Bedienung des Pflegebettes ermöglicht.

Die Erfindung soll im Folgenden anhand eines in der Zeichnung dargestellten Ausführungsbeispiels näher erläutert werden. Es zeigen:
- **Figur 1**: eine schematische Darstellung einer Höhenverstelleinrichtung mit einer daran angeordneten Gewichtsmesseinrichtung gemäß einem Ausführungsbeispiel der Erfindung,
- **Figur 2**: einen Querschnitt der Gewichtsmesseinrichtung aus Figur 1,
- **Figur 3a**: einen Querschnitt eines Grundkörpers der Gewichtsmesseinrichtung aus Figur 2,
- **Figur 3b**: eine Draufsicht auf den Grundkörper aus den Figuren 2 und 3a,
- **Figur 4**: eine Seitenansicht eines Untergestells eines Pflegebettes gemäß einem Ausführungsbeispiel der Erfindung,
- **Figur 5**: eine Seitenansicht eines Untergestells gemäß Figur 4 mit einer zu messenden Last.

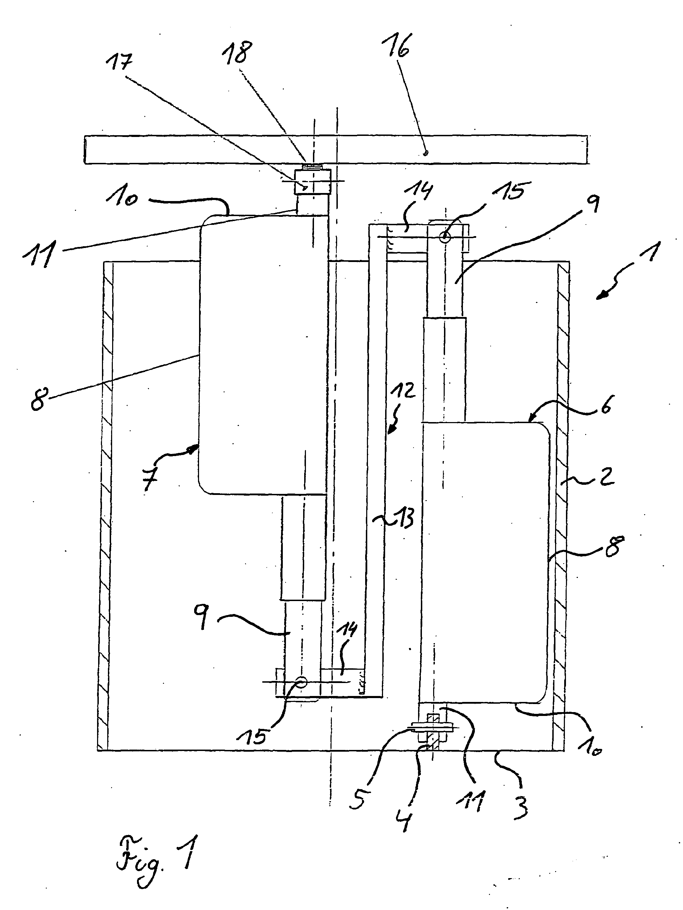

Eine in Figur 1 dargestellte Höhenverstelleinrichtung 1 weist ein zylindrisches mantelförmiges Gehäuse 2 auf, dessen untere Stirnseite 3 offen oder aus hygienischen Gründen abgedeckt sein kann. Über die Tiefe des Gehäuses 2 erstreckt sich am unteren Ende eine Befestigungsschiene 4, die wenigstens eine Durchgangsöffnung für einen Befestigungsbolzen 5 aufweist. In dem Gehäuse 2 befindet sich ein erster Elektromotor 6 und ein zweiter Elektromotor 7. Die beiden Elektromotoren 6, 7 weisen jeweils ein zylindrisches Gehäuse 8 auf, aus dem sich an einer Stirnseite eine Spindelstange 9 axial verschiebbar nach außen erstreckt. An dem der Spindelstange 9 gegenüberliegenden bodenseitigen Ende 10 des Gehäuses 2 befindet sich ein gabelartiger Ansatz 11. Der gabelartige Ansatz 11 des ersten Elektromotors 6 greift über die Befestigungsschiene 4 und weist im gabelförmigen Teil Durchgangslöcher für den Befestigungsbolzen 5 auf, so dass der erste Elektromotor 6 an der Schiene 4 mittels des Befestigungsbolzens 5 befestigt ist.

Die beiden Elektromotoren 6, 7 sind in dem Gehäuse 2 nebeneinander, jedoch antiparallel zueinander angeordnet. In der in der Figur 1 dargestellten Situation sind die beiden Spindelstangen 9 teilweise ausgefahren. An den freien Enden der beiden Spindelstangen 9 ist ein Verbindungsteil 12 befestigt, das aus einem den Höhenabstand zwischen den beiden Enden der Spindelstange 9 überbrückenden Mittelstück 13 und zwei an den Enden des Mittelstücks 13 rechtwinklig angesetzten Ansätzen 14 besteht. Die Ansätze 14 liegen bezüglich der Mittelachse des Mittelstücks 13 einander diametral gegenüber, zeigen also in entgegengesetzte Richtungen.

Die Befestigung der Ansätze 14 an den Spindelstangen 9 kann in analoger Weise mit einem gabelförmigen Ende der Spindelstange 9 erfolgen, in das der Ansatz 14 einlegbar ist. Durch miteinander fluchtende Durchgangsöffnungen kann ein Verbindungsbolzen 15 die bezüglich der Bewegung der Spindelstangen 9 in Richtung der Höhe starre Befestigung des Verbindungsteils 12 mit den Spindelstangen 9 bewirken.

Zur Betätigung der Höhenverstelleinrichtung 1 werden die beiden Elektromotoren 6, 7 vorzugsweise durch eine gemeinsame Steuerung synchronisiert gesteuert, so dass beide Elektromotoren 6, 7 gleichzeitig und in gleicher Weise ihre Spindelstangen 9 aus dem Gehäuse 8 ausfahren.

Zwischen dem bodenseitigen Ende 10 des zweiten Elektromotors 7 und einer darüber angeordneten Kopfplatte 16 als Auflageträger ist eine Gewichtsmesseinrichtung 17 angeordnet. Der zweite Elektromotor 7 ist mit einem gabelartigen Ansatz 11 mit der Gewichtsmesseinrichtung 17 verbunden. An der dem Elektromotor 7 gegenüberliegenden Seite der Gewichtsmesseinrichtung 17 ist ein bevorzugt elektronischer Gewichtssensor 18 angeordnet, der die Kopfplatte 16 berührt.

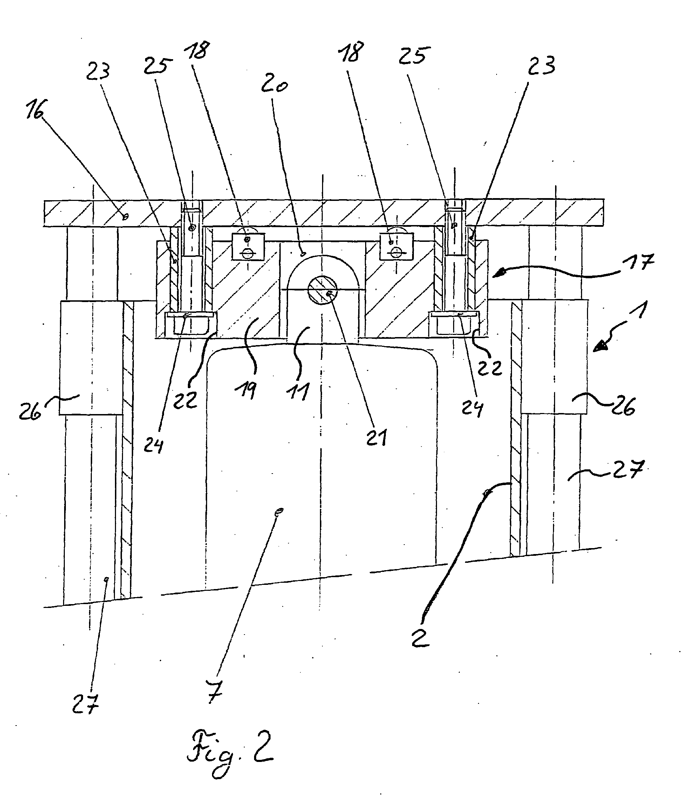

In der Figur 2 ist in einer Querschnittsdarstellung die Gewichtsmesseinrichtung 17 gezeigt, die an der Oberseite der Höhenverstelleinrichtung 1 angeordnet ist. Die Gewichtsmesseinrichtung 17 weist einen Grundkörper 19 auf, bei dem mittig ein Steg 20 ausgebildet ist. Der Steg 20 wird in den gabelartigen Ansatz 11 des zweiten Elektromotors 7 eingelegt, so dass der Ansatz 11 den Steg 20 übergreift. Ein Befestigungsbolzen 21 wird in fluchtenden Durchgangsöffnungen des gabelartigen Ansatzes 11 und des Steges 20 eingeschoben und bewirkt somit eine feste Verbindung des Grundkörpers 19 mit der Höhenverstelleinrichtung 1.

Der Grundkörper 19 weist auf seinen beiden Seiten neben dem Steg 20 zwei Bohrungen 22 auf. In die Bohrungen 22 ist jeweils eine Distanzhülse 23 eingebracht. Die Distanzhülse 23 ist mittels einer Unterlegscheibe 24 und einer Schraube 25 an der Kopfplatte 16 befestigt. Durch eine gleitende Bewegung der Innenwandfläche der Bohrung 22 an der Außenwandfläche der Distanzhülse 23 wird eine vertikale Bewegung des Grundkörpers 19 relativ zu der Kopfplatte 16 ermöglicht. Folglich ist der Grundkörper 19 an der Kopfplatte 16 beweglich gelagert. Um eine möglichst ruckfreie Gleitbewegung sicherzustellen, ist bevorzugt ein Gleit bzw. Schmiermittel zwischen der Distanzhülse 23 und der Bohrung 22 vorgesehen.

Die vertikale relative Bewegung zwischen dem Grundkörper 19 und der Kopfplatte 16 wird durch das auf die Kopfplatte 16 wirkende Gewicht verursacht. Die Gewichtskraft wird nun auf die Gewichtssensoren 18 weitergeleitet. Bei einem gewichtsabhängigen Nachgeben der Gewichtssensoren 18 wird die Kopfplatte 16 in Richtung des Grundkörpers 19 bewegt, folglich nimmt mit einem zunehmendem Gewicht der Abstand zwischen dem Grundkörper 19 und der Kopfplatte 16 ab. An der Außenseite des Gehäuses 2 sind Gleitlager 26 angeordnet, in denen zugehörige zylindrische Kolben 27 geführt werden, die an ihrem oberen Ende mit der Kopfplatte 16 verbunden sind. Die zylindrischen Kolben 27 sorgen dafür, dass die Kopfplatte 16 sich nicht um den Befestigungsbolzen 21 als Drehpunkt verkippt. Somit wird die Kopfplatte 16 in einer horizontalen Position relativ zur Bewegungsrichtung des Hubes gehalten.

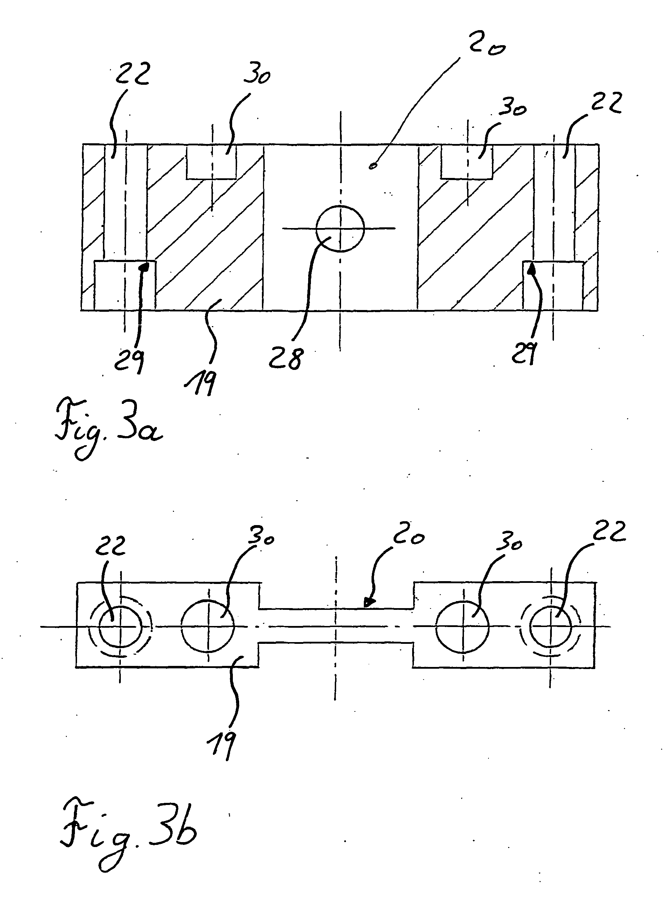

In der Figur 3a ist ein Querschnitt des Grundkörpers 19 dargestellt. Der Grundkörper 19 weist in seiner Mitte den Steg 20 mit einem Durchgangsloch 28 zur Aufnahme des Befestigungsbolzens 21 aus Figur 2 auf. In den seitlichen Endbereichen des Grundkörpers 19 ist jeweils eine Bohrung 22 ausgebildet. Die Bohrung weist einen kreisförmigen Absatz 29 auf, so dass die Bohrung 22 unterhalb des Absatzes 29 einen größeren Durchmesser aufweist. Der Absatz 29 dient als Anschlag für die Unterlegscheibe 24 aus Figur 2.

An der Oberseite des Grundkörpers 19 ist beidseitig des Steges 20 jeweils eine noch oben offene Ausnehmung 30 zwischen der Bohrung 22 und dem Steg 20 vorgesehen. Die Ausnehmung 30 ist beispielsweise eine Sackbohrung und dient zur Aufnahme der Gewichtssensoren 18 (nicht dargestellt in dieser Figur). Der Grundkörper weist bevorzugt eine Länge von etwa 70 bis 80 mm, eine Breite von etwa 10 bis 20 mm und eine Höhe von etwa 20 bis 30 mm auf. In dem in den Figuren dargestellten Ausführungsbeispiel betragen die Werte 74 mm Länge, 15 mm Breite und 25 mm Höhe.

In der in der Figur 3b dargestellten Draufsicht auf den Grundkörper 19 ist deutlich der zum restlichen Grundkörper 19 dünnere Steg 20 zu erkennen, der in den gabelartigen Ansatz 11 (Figur 2) eingelegt werden kann. Auf beiden Seiten des Steges 20 befinden sich jeweils nebeneinander die Ausnehmung 30 und weiter nach Außen die Bohrung 22. Die Breite des Absatzes 29 innerhalb der Bohrung 22 ist durch eine Strichlinie angedeutet.

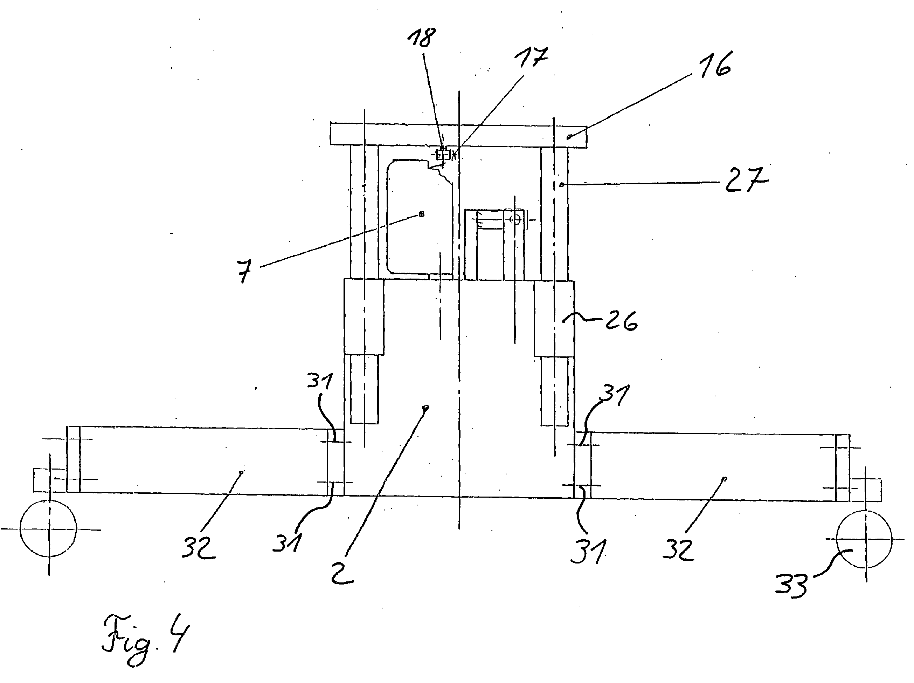

Figur 4 verdeutlicht den Unterbau eines Pflegebettes und lässt die - in dieser Darstellung angehobene - Kopfplatte 16, den in Kontakt mit der Kopfplatte 16 befindlichen Drucksensor 18, die relativ zu der Kopfplatte 16 beweglich gelagerte Gewichtsmesseinrichtung 17 sowie den daran befestigten Elektromotor 7 erkennen. Ebenfalls zu erkennen sind die zylindrischen Kolben 27, die in Gleitlagern 26 an der Seite des Gehäuses 2 geführt werden und an ihrem oberen Ende mit der Kopfplatte 16 verbunden sind. Das Gehäuse 2 ist durch Schraubverbindungen 31 mit einem Chassisrahmen 32 verbunden, der mit Rädern 33 versehen ist und so ein Fahrgestell für das Pflegebett bildet. Um die Standsicherheit des Pflegebettes zu erhöhen, ist bevorzugt der Radstand der Räder 33 im Vergleich zu der Breite des Gehäuses 2 breiter.

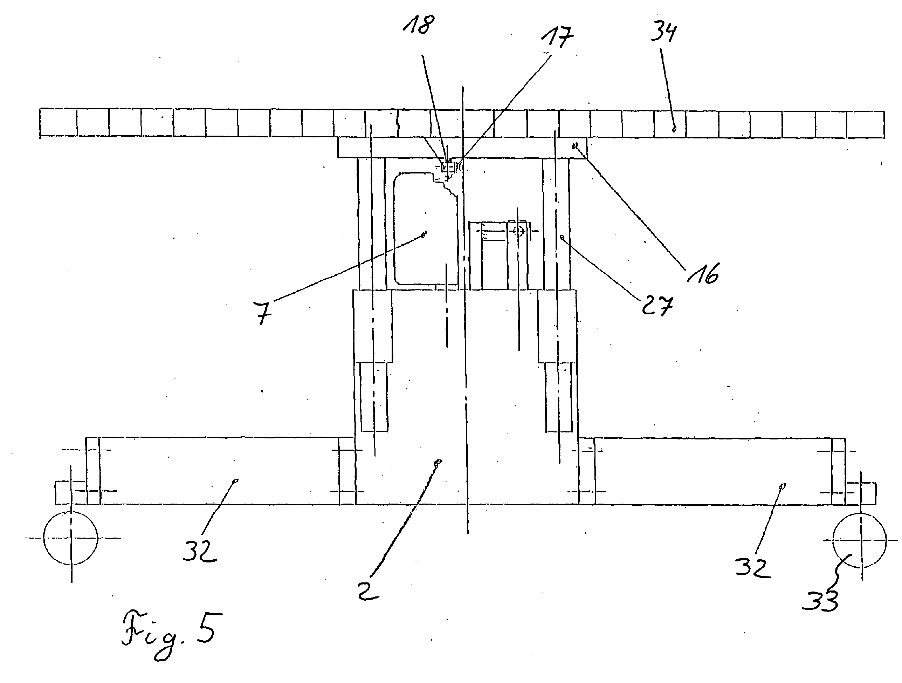

Die Figur 5 entspricht der Darstellung aus der Figur 4 mit einer zusätzlich dargestellten Liegefläche 34. Die Liegefläche 34 ist oberhalb der Kopfplatte 16 angeordnet und auf dieser befestigt. Es ist aus den Figuren erkennbar, dass die Liegefläche 34 die Messfläche für die Gewichtsmessung darstellt. Ein oberhalb der Liegefläche 34 und den auf der Liegefläche 34 aufgelegten Bettzeug (nicht dargestellt) liegender Patient kann mit Hilfe des erfindungsgemäßen Pflegebettes bezüglich seines Körpergewichts überwacht werden, ohne dass er hierzu das Pflegebett verlassen muss oder ein anderer erhöhter Aufwand erforderlich ist. Neben der Anwendung als Pflegebett ist eine Verwendung bei einem Wickeltisch und/oder einem Behandlungstisch im medizinischtherapeutischen Bereich möglich.

## Patentansprüche

1. Pflegebett mit einem Chassisrahmen (32) mit Füßen oder Rädern (33), einem mit Abstand über dem Chassisrahmen (32) angeordneten Auflageträger, einer zwischen Chassisrahmen (32) und Auflageträger angeordneten Höhenverstelleinrichtung (1), die an einer zentralen Position an dem Auflageträger angesetzt ist und Gleitlager (26) der Höhenverstelleinrichtung (1) für mit dem Auflageträger verbundene zylindrische Kolben (27) zur Vermeidung einer Verkippung des Auflageträgers relativ zur Höhenverstelleinrichtung (1), **gekennzeichnet durch** eine an der Höhenverstelleinrichtung (1) angeordnete, an einer zentralen Position des Auflageträgers angreifende Gewichtsmesseinrichtung (17) mit wenigstens einem Gewichtssensor (18).

2. Pflegebett nach Anspruch 1, **dadurch gekennzeichnet, dass** die Gleitlager (26) an der Außenseite eines Gehäuses (2) der Höhenverstelleinrichtung (1) angeordnet sind.

3. Pflegebett nach Anspruch 1 oder 2, **dadurch gekennzeichnet, dass** die Gewichtsmesseinrichtung (17) einen Grundkörper (19) aufweist, der mit seiner Unterseite an der Oberseite der Höhenverstelleinrichtung (1) fest und mit seiner Oberseite an der Unterseite des Auflageträgers beweglich gelagert ist.

4. Pflegebett nach Anspruch 3, **dadurch gekennzeichnet, dass** in dem Grundkörper (19) zumindest eine vertikale Bohrung (22) zur Aufnahme eines an dem Auflageträger befestigten und von diesem vorstehenden Zylinders (23) vorgesehen ist, so dass der Grundkörper (19) an dem Zylinder (23) auf- und abgleitend beweglich ist.

5. Pflegebett nach einem der Ansprüche 3 oder 4, **dadurch gekennzeichnet, dass** der Grundkörper (19) zur Aufnahme zumindest eines Gewichtssensors (18) eine zu der beweglich gelagerten Seite offene Ausnehmung (30) aufweist.

6. Pflegebett nach einem der vorstehenden Ansprüche, **dadurch gekennzeichnet, dass** eine mit der Gewichtsmesseinrichtung (17) verbundene Auswerte- und Steuereinrichtung vorgesehen ist.

7. Pflegebett nach Anspruch 6, **dadurch gekennzeichnet, dass** eine mit der Auswerte- und Steuereinrichtung verbundene Anzeige zur Darstellung des gemessenen Gewichts vorgesehen ist.

8. Pflegebett nach einem der vorstehenden Ansprüche, **dadurch gekennzeichnet, dass** die Höhenverstelleinrichtung (1) durch eine elektrische Motoranordnung angetrieben ist.

## Claims

1. Care bed with a chassis frame (32) having legs or wheels (33), a support carrier arranged at a distance above the chassis frame (32), a height-adjusting device (1) which is arranged between chassis frame (32) and support carrier and is positioned at a central position on the support carrier, and sliding bearings (26) of the height-adjusting device (1) for cylindrical pistons (27) connected to the support carrier in order to avoid tilting of the support carrier relative to the height adjusting device (1), **characterized by** a weight-measuring device (17) which is arranged on the height-adjusting device (1), acts on a central position of the support carrier and has at least one weight sensor (18).

2. Care bed according to Claim 1, **characterized in that** the sliding bearings (26) are arranged on the outside of a housing (2) of the height-adjusting device (1).

3. Care bed according to Claim 1 or 2, **characterized in that** the weight-measuring device (17) has a basic body (19), the lower side of which is mounted fixedly on the upper side of the height-adjusting device (1) and the upper side of which is mounted moveably on the lower side of the support carrier.

4. Care bed according to Claim 3, **characterized in that** the basic body (19) is provided with at least one vertical hole (22) for accommodating a cylinder (23) fastened to the support carrier and protruding therefrom, and therefore the basic body (19) is moveable in a manner sliding up and down on the cylinder (23).

5. Care bed according to either of Claims 3 and 4, **characterized in that,** in order to receive at least one weight sensor (18), the basic body (19) has a recess (30) which is open toward the moveably mounted side.

6. Care bed according to one of the preceding claims, **characterized in that** an evaluation and control device connected to the weight-measuring device (17) is provided.

7. Care bed according to Claim 6, **characterized in that** a display connected to the evaluation and control device is provided to represent the measured weight.

8. Care bed according to one of the preceding claims, **characterized in that** the height-adjusting device (1) is driven by an electric motor arrangement.

## Revendications

1. Lit médicalisé comportant un cadre de châssis (32) doté de pieds ou de roues (33), un support placé à distance au-dessus du cadre de châssis (32), un dispositif de réglage en hauteur (1) disposé entre le cadre de châssis (32) et le support, ce dispositif de réglage en hauteur étant situé dans une position centrale sous le support, et des paliers lisses (26) du dispositif de réglage en hauteur (1) pour des pistons cylindriques (27) liés avec le support pour éviter un basculement du support relativement au dispositif de réglage en hauteur, **caractérisé par** un dispositif de mesure du poids (17) agencé sur le dispositif de réglage en hauteur (1) et venant en prise avec une position centrale du support, le dispositif de mesure du poids (17) comportant au moins un capteur de poids (18).

2. Lit médicalisé selon la revendication 1, **caractérisé en ce que** les paliers lisses (26) sont agencés sur la face externe d'un boîtier (2) du dispositif de réglage en hauteur (1).

3. Lit médicalisé selon la revendication 1 ou 2, **caractérisé en ce que** le dispositif de mesure du poids (17) présente un bâti (19), qui est supporté fixement par sa face inférieure sur la partie supérieure du dispositif de réglage en hauteur (1) et de façon mobile par sa face supérieure sur la face inférieure du support.

4. Lit médicalisé selon la revendication 3, **caractérisé en ce qu'**il est prévu dans le bâti (19) au moins un alésage vertical (22) pour recevoir un cylindre (23) fixé au support et en faisant saillie, de sorte que le bâti (19) est mobile de façon glissante vers le haut et vers le bas sur le cylindre (23).

5. Lit médicalisé, selon la revendication 3 ou 4, **caractérisé en ce que** pour recevoir au moins un capteur de poids (18) le bâti (19) présente un évidement (30) ouvert vers le côté supporté de façon mobile.

6. Lit médicalisé, selon une des revendications précédentes, **caractérisé en ce qu'**il est prévu un dispositif d'évaluation et de commande relié au dispositif de mesure du poids (17).

7. Lit médicalisé selon la revendication 6, **caractérisé en ce qu'**il est prévu un indicateur relié au dispositif d'évaluation et de commande pour la présentation du poids mesuré.

8. Lit médicalisé selon une des revendications précédentes, **caractérisé en ce que** le dispositif de réglage en hauteur (1) est commandé par un agencement à moteur électrique.
